# EUROPEAN PATENT SPECIFICATION

(11) **EP 4 434 938 B1**
(45) Date of publication and mention of the grant of the patent: **02.07.2025**
(21) Application number: 23199685.1
(22) Date of filing: 26.09.2023
(51) Int. Cl.: C01B 25/45, H01M 4/58, H01M 4/36

(54) **MANUFACTURING METHOD OF CARBON-COATED LITHIUM IRON PHOSPHATE MATERIAL**
VERFAHREN ZUR HERSTELLUNG EINES KOHLENSTOFFBESCHICHTETEN LITHIUMEISENPHOSPHATMATERIALS
PROCÉDÉ DE FABRICATION D'UN MATÉRIAU DE PHOSPHATE DE FER ET DE LITHIUM REVÊTU DE CARBONE

(30) Priority: 21.03.2023 TW 112110482
(43) Date of publication of application: 25.09.2024
(73) Proprietor: Advanced Lithium Electrochemistry Co., Ltd., Taoyuan City 330 (TW)
(72) Inventor: Wang, Ya-Hui, 330 Taoyuan City (TW); Tsai, Feng-Yen, 330 Taoyuan City (TW)
(74) Representative: 2K Patentanwälte Blasberg Kewitz & Reichel

(56) References cited:
- US-A1- 2023 080 632
- DATABASE WPI Week 201960, Derwent World Patents Index; AN 2019-576893, XP002811110
- DATABASE WPI Week 2023029, Derwent World Patents Index; AN 2023-31837M, XP002811111
- DATABASE WPI Week 2022034, Derwent World Patents Index; AN 2021-D56518, XP002811112

## Description

### FIELD OF THE INVENTION

The present disclosure relates to a manufacturing method of a cathode material, and more particularly to a manufacturing method of a carbon-coated lithium iron phosphate material.

### BACKGROUND OF THE INVENTION

Lithium-ion batteries are widely used in the field of energy storage due to their excellent cycling performance and high energy density. Among the various types of lithium-ion batteries, those that utilize the lithium iron phosphate (LiFePO₄) as the positive electrode material offer advantages such as low material cost and high safety, making them a highly promising type. However, the olivine structure of the lithium iron phosphate leads to lower lithium-ion diffusion rate and electronic conductivity, thereby restricting the application of the lithium iron phosphate.

To overcome the mentioned limitations, the industry has adopted the carbon coating process to enhance the performance of lithium iron phosphate. However, in the conventional carbon coating process, the alkaline nature of the lithium-containing slurry and the temperature rise during the grinding process lead to oxidation and decomposition of the carbon source in the alkaline and high-temperature environment. Additionally, temperature fluctuations during the grinding process affect the solubility of the lithium salt in the slurry, leading to a decline in the overall stability of the carbon-coated lithium iron phosphate material. As a result, the traditional carbon coating processes yield carbon-coated lithium iron phosphate materials with insufficient carbon content and unstable quality.
DATABASE WPI Week 201960 Thomson Scientific, London, GB; AN 2019-576893, CN 109 920 989 A, DATABASE WPI Week 2023029 Thomson Scientific, London, GB; AN 2023-31837M, CN 115 806 283 A, DATABASE WPI Week 2022034 Thomson Scientific, London, GB; AN 2021-056518, CN 113 651 304 A, US 2023/080632 Al disclose manufacturing methods of a carbon-coated lithium iron phosphate material.

Therefore, there is a need to provide a manufacturing method of a carbon-coated lithium iron phosphate material that effectively regulates the slurry temperature, thereby ensuring optimal carbon content and enhancing the stability of the product quality.

### SUMMARY OF THE INVENTION

An object of the present disclosure is to provide a manufacturing method of a carbon-coated lithium iron phosphate material that effectively regulates the slurry temperature, thereby ensuring optimal carbon content and enhancing the stability of the product's quality. First, a carbon source, a lithium source, and a slurry formed from an iron source and a phosphorus source is provided. Next, the first slurry, the carbon source and the lithium source are mixed to form a second slurry. The second slurry is then ground in a tank at a temperature ranged from 25 °C to 40 °C to form a third slurry. Finally, the third slurry is dried and sintered to form a carbon-coated lithium iron phosphate material. By controlling the slurry temperature within a specific temperature range, the consistency of the lithium source solubility in the slurry is ensured, while avoiding the oxidation and decomposition of the carbon source in the high-temperature environment. As a result, the carbon content of the carbon-coated lithium iron phosphate material is guaranteed, thereby enhancing the stability of the product quality. Furthermore, the slurry temperature is controlled by employing liquid cooling method through a cooling jacket. The cooling jacket surrounds the internal space of the tank where the slurry is accommodated, ensuring smooth and uniform temperature control, thereby further enhances the stability of the product quality.

In accordance with an aspect of the present disclosure, a manufacturing method of a carbon-coated lithium iron phosphate material is provided. The manufacturing method of the carbon-coated lithium iron phosphate material includes: (a) providing a first slurry, a carbon source and a lithium source, wherein the first slurry is formed from an iron source and a phosphorus source; (b) mixing the first slurry, the carbon source and the lithium source to form a second slurry, and grinding the second slurry in a tank at a first temperature to form a third slurry, wherein the first temperature is ranged from 25 °C to 40 °C; and (c) drying and sintering the third slurry to form the carbon-coated lithium iron phosphate material including a core layer and a coating layer coated on the core layer, wherein the core layer comprises lithium, iron, and phosphorus, wherein the coating layer comprises carbon.

In an embodiment, a liquid cooling method is performed to control the first temperature.

In an embodiment, the tank further comprises a first chamber and a cooling jacket. The second slurry and the third slurry are accommodated in the first chamber for mixing and grinding, the cooling jacket is disposed to surround the first chamber, and the liquid cooling method is performed through the cooling jacket, wherein a liquid flows in the cooling jacket to absorb a heat generated from the second slurry in the first chamber.

In an embodiment, the cooling jacket comprises at least two channels and a second chamber, wherein the second chamber is connected between at least two channels and disposed to surround the first chamber, and a liquid flows into and out of the second chamber through the at least two channels, wherein the liquid flows into the second chamber through the first channel, the heat generated from the second slurry in the first chamber is transferred to the second chamber and absorbed by the liquid, and then the liquid flows out of the second chamber through the second channel.

In an embodiment, the carbon source, the lithium source and the first slurry are ground by a ball milling method.

In an embodiment, the second slurry and the third slurry are alkaline.

In an embodiment, the iron source includes an iron powder, the phosphorus source includes a phosphoric acid solution, and the iron powder and the phosphoric acid solution are reacted to form the first slurry.

In an embodiment, the third slurry is dried by a spray drying method.

In an embodiment, the third slurry is sintered at a sintering temperature ranged from 550 °C to 750 °C.

In an embodiment, the third slurry is sintered in a non-oxidizing atmosphere.

In an embodiment, the carbon-coated lithium iron phosphate material has a carbon content of ranged from 1.0 wt% to 1.6 wt%.

### BRIEF DESCRIPTION OF THE DRAWINGS

FIG. 1 is a flow chart of a manufacturing method of a carbon-coated lithium iron phosphate material according to an embodiment of the present disclosure;
FIG. 2A is a schematic structural view of a tank according to an embodiment of the present disclosure; and
FIG. 2B is a cross-sectional view along the A-A' line of FIG. 2A.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed. In addition, although the "first," "second," "third," and the like terms in the claims be used to describe the various elements can be appreciated, these elements should not be limited by these terms, and these elements are described in the respective embodiments are used to express the different reference numerals, these terms are only used to distinguish one element from another element. For example, a first element could be termed a second element, and, similarly, a second element could be termed a first element, without departing from the scope of example embodiments. Besides, "and/or" and the like may be used herein for including any or all combinations of one or more of the associated listed items. Alternatively, the word "about" means within an acceptable standard error of ordinary skill in the art-recognized average. In addition to the operation / working examples, or unless otherwise specifically stated, in all cases, all of the numerical ranges, amounts, values and percentages, such as the number for the herein disclosed materials, time duration, temperature, operating conditions, the ratio of the amount, and the like, should be understood as the word "about" decorator. Accordingly, unless otherwise indicated, the numerical parameters of the present invention and scope of the appended patent proposed is to follow changes in the desired approximations. At last, the number of significant digits for each numerical parameter should at least be reported and explained by conventional rounding technique is applied. Herein, it can be expressed as a range between from one endpoint to the other or both endpoints. Unless otherwise specified, all ranges disclosed herein are inclusive.

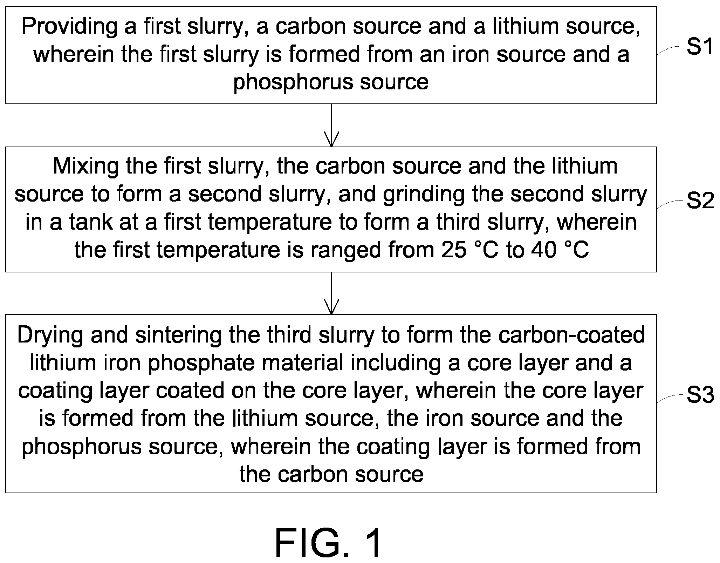

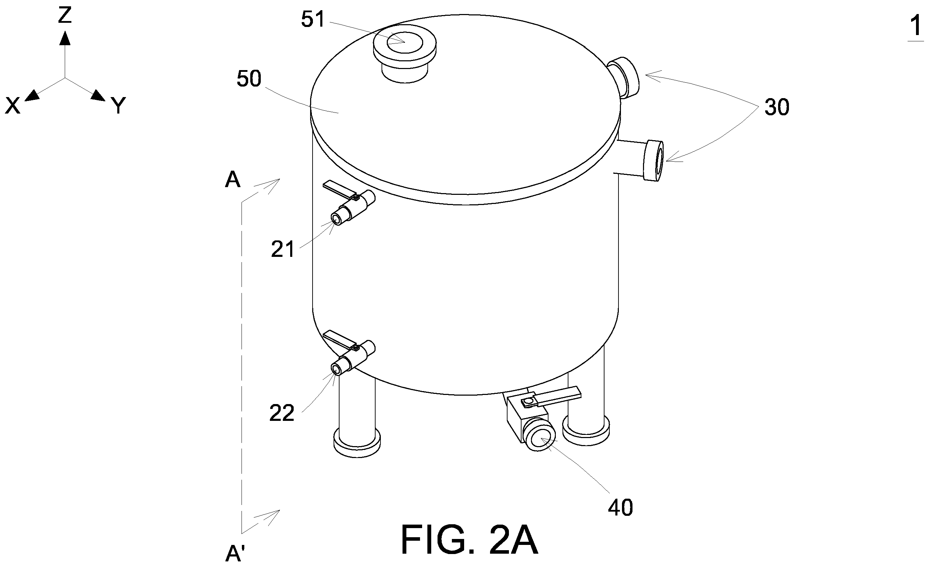

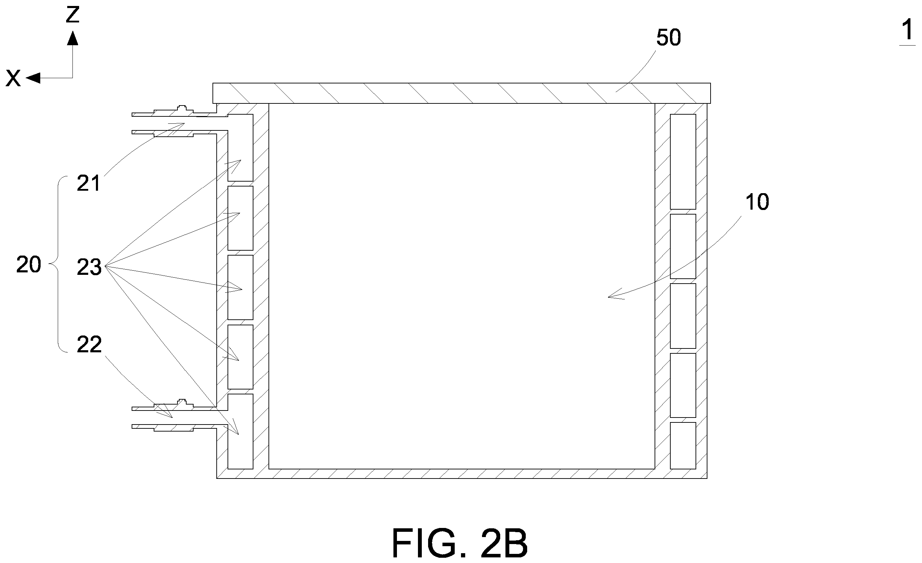

Refer to FIGS. 1 to 2B. FIG. 1 is a flow chart of a manufacturing method of a carbon-coated lithium iron phosphate material according to an embodiment of the present disclosure. FIG. 2A is a schematic structural view of a tank according to an embodiment of the present disclosure. FIG. 2B is a cross-sectional view along the A-A' line of FIG. 2A. In the embodiment, the manufacturing method of the carbon-coated lithium iron phosphate material includes following steps. First, as shown in the step S1, a first slurry, a carbon source, and a lithium source are provided. The first slurry is formed from an iron source and a phosphorus source. In the embodiment, the iron source includes an iron powder, the phosphorus source includes a phosphoric acid (H₃PO₄), and the iron powder and a phosphoric acid solution are reacted to form the first slurry. Preferably but not exclusively, the reaction time is ranged from 17 hours to 24 hours, so as to form a more stable first slurry. The carbon source is a water-soluble carbohydrate, including but not limited to a glucose, a fructose, a galactose, a sucrose, a maltose, or a lactose. The lithium source is a lithium salt, including but not limited to a lithium hydroxide (LiOH), a lithium carbonate (Li₂CO₃), a lithium nitrate (LiNO₃), or a lithium chloride (LiCl). In other embodiments, the lithium source is a combination of multiple different lithium salts. The present disclosure is not limited thereto.

Next, as shown in the step S2, the first slurry, the carbon source and the lithium source are mixed to form a second slurry. The second slurry is then ground in a tank 1 at a first temperature to form a third slurry. The first temperature is ranged from 25 °C to 40 °C, preferably from 27 °C to 35 °C. In the embodiment, the first slurry, the carbon source and the lithium source are mixed and reacted to form the second slurry at a second temperature. The second temperature is equal to or below 50 °C, preferably ranged from 30 °C and 50 °C. The second slurry is ground by a ball milling method for 9 to 12 hours to form the third slurry. The third slurry has a median particle size (D50) of 1.0 µm. The second slurry and the third slurry are alkaline. Notably, the grinding conditions and the median particle size (D50) of the third slurry are not limited thereto, and are adjustable according to specific requirements or needs.

In the embodiment, the tank 1 includes a first chamber 10 and a cooling jacket 20. The second slurry and the third slurry are accommodated in the first chamber 10, and the cooling jacket 20 is disposed to surround the first chamber 10. Preferably but not exclusively, a liquid cooling method is performed to control the first temperature through the cooling jacket 20. The cooling jacket 20 includes a second chamber 21, a first channel 22 and a second channel 23. The second chamber 21 is connected between the first channel 22 and the second channel 23 and is disposed to surround the first chamber 10. In the embodiment, the second chamber is a spiral channel concentrically disposed with the first chamber 10, forming a ring shape that encircles the first chamber 10. A liquid flows into and out of the second chamber 21 through the first channel 22 and the second channel 23.

In the embodiment, the liquid flows into the second chamber 21 through the first channel 22, and the heat generated from the second slurry in the first chamber 10 is transferred to the second chamber 21 and absorbed by the liquid therein. After absorbing the heat, the liquid flows out of the second chamber 21 through the second channel 23. The temperature of the second slurry in the tank 1 is regulated by the circulation of the liquid in the cooling jacket 20 of the tank 1. Furthermore, the second chamber 21 is disposed to surround the first chamber 10. The liquid flows through the second chamber 21, and the slurry is accommodated in the first chamber 10. The arrangement ensures smooth and uniform temperature control, which guarantees consistent solubility of the lithium source in the slurry and avoids oxidation and decomposition of the carbon source within high-temperature environments.

In the embodiment, the first channel 22 is disposed at an upper part of the tank 1, and the second channel 23 is disposed at a lower part of the tank 1. The first channel 22 and the second channel 23 are disposed in a vertical direction (i.e., the Z-axis direction).

In another embodiment, the liquid flows into the second chamber 21 through the first channel 22 and flows out of the second chamber 21 through the second channel 23. The first channel 22 and the second channel 23 are both disposed at an upper part of the tank 1.

In another embodiment, the liquid flows into the second chamber 21 through the first channel 22 and flow out of the second chamber 21 through the second channel 23. The first channel 22 and the second channel 23 are both disposed at a lower part of the tank 1.

In another embodiment, the liquid flows into the second chamber 21 through two first channels 22 and flow out of the second chamber 21 through two second channels 23. The two first channels 22 are disposed along the vertical direction (i.e., the Z-axis direction). One of the two first channels 22 is disposed at an upper part of the tank 1, and the other one of the two first channels 22 is disposed at a lower part of the tank 1. The two second channels 23 are disposed along the vertical direction (i.e., the Z-axis direction). One of the two second channels 23 is disposed at an upper part of the tank 1, and the other one of the two second channels 23 is disposed at a lower part of the tank 1. Notably, the number and the arrangement of the channels are not limited thereto, and are not redundantly described herein.

In the embodiment, the tank 1 further includes an inlet port 30, an outlet port 40 and a cover 50. The inlet port 30 and the outlet port 40 are each connected to the first chamber 10. A grinding unit (not shown in the figures) is connected to the inlet port 30 and the outlet port 40, establishing a connection with the first chamber 10. During the mixing and grinding process, the second slurry exits the first chamber 10 through the outlet port 40 and enters the grinding unit for grinding. Subsequently, the first slurry leaves the grinding unit through the inlet port 30 and re-enters the first chamber 10 for mixing and cooling. In this way, continuous cooling of the slurry throughout the mixing and grinding process is achieved, resulting in smooth and uniform temperature control and enhanced stability of the product quality.

The cover 50 is disposed above the first chamber 10 to shield the first chamber 10 along the vertical direction (i.e., the Z-axis direction), preventing impurities or foreign substances from contaminating the slurry during the process. In the embodiment, the cover 50 further includes a through hole 51. The solid lithium salts are introduced into the first chamber 10 through the through hole 51. In other embodiments, the cover 50 includes a plurality of through holes 51, each of which has a unique diameter. The solid lithium salts are introduced into the first chamber 10 through the plurality of through holes 51, and a thermometer is inserted into the first chamber 10 through the plurality of through holes 51 for measuring the slurry temperature. The present disclosure is not limited thereto. Notably, the carbon source, the lithium source and the first slurry may be mixed and reacted in the tank 1 to form the second slurry having the second temperature equal to or below 50 °C.

Finally, as shown in the step S3, the third slurry is dried and sintered to form the carbon-coated lithium iron phosphate material. The carbon-coated lithium iron phosphate material includes a core layer and a coating layer coated on the core layer. The core layer is formed from the lithium source, the iron source and the phosphorus source, and the coating layer is formed from the carbon source. In the embodiment, the product obtained from the previous step is dried by a spray drying method. Subsequently, it is sintered at a temperature ranged from 550 °C and 750 °C in a non-oxidizing atmosphere for a duration of 7 to 15 hours. The carbon-coated lithium iron phosphate material has a carbon content ranged from 1.0 wt% to 1.6 wt%. Certainly, the drying method, sintering conditions, and the percentage of the carbon content of the carbon-coated lithium iron phosphate material are not limited thereto, and are adjustable according to specific requirements or needs.

The manufacturing method and the effects of the present disclosure are further described in detail below through demonstrative examples and comparative examples.

### First demonstrative example

First, a first slurry, a carbon source and a lithium source are provided. The first slurry is formed by reacting 5585 grams of iron powder, 11529 grams of 85 wt% phosphoric acid solution, and 40 liters of deionized water in a tank for a duration of 20 hours. In the first demonstrative example, target specifications for the carbon-coated lithium iron phosphate material include a weight of 1578 grams and a carbon content of 1.30 wt%. Notably, during the sintering process, 50 wt% of the carbon content is lost. Therefore, the carbon content in the carbon-coated lithium iron phosphate material is half of the carbon content in the third slurry. To achieve the target specification, 41.0 grams of carbon needs to be added as the carbon source. Furthermore, in the first demonstrative example, the carbon source is a glucose, where carbon atoms account for 40 wt% of its molecular mass. Consequently, 102.5 grams of glucose is required to yield the desired 41.0 grams of carbon. The lithium source is 1197 grams of lithium hydroxide (LiOH) and 1847 grams of lithium carbonate (Li₂CO₃). The 5585 grams of iron powder contains 100 moles of iron, while the 11529 grams of 85 wt% phosphoric acid solution contains 100 moles of phosphorus. The combination of the 1197 grams of lithium hydroxide and the 1847 grams of lithium carbonate contains 100 moles of lithium. These components are used to produce 100 moles of lithium iron phosphate.

Next, the 102.5 grams of glucose, the 1197 grams of lithium hydroxide (LiOH) and the 1847 grams of lithium carbonate (Li₂CO₃) are added to the mixing first slurry, and are reacted to form a second slurry. Subsequently, the second slurry is ground by a ball milling method to form a third slurry. During the grinding process, a liquid cooling method is performed to control the temperature of the second slurry through the cooling jacket of the tank. The temperature of the second slurry is maintained at 25 °C. The third slurry has a median particle size (D50) of 1.0 µm.

Finally, the third slurry is dried and sintered to form a carbon-coated lithium iron phosphate. The third slurry is dried by a spray drying method, and is sintered at a temperature ranged from 550 °C and 750 °C in a nitrogen atmosphere for a duration of 10 hours to form a carbon-coated lithium iron phosphate. The carbon-coated lithium iron phosphate material of the first demonstrative example is subjected to a BET specific surface area test, which yields a measured specific surface area of 9.60 cm²/g. The carbon-coated lithium iron phosphate material of the first demonstrative example is subjected to an elemental analysis, which yields a measured carbon content of 1.15 wt%.

### First comparative example

The manufacturing method of the first comparative example is roughly similar to that of the first demonstrative example. However, in the first comparative example, the temperature of the second slurry is maintained at 45 °C. The carbon-coated lithium iron phosphate material of the first comparative example is subjected to a BET specific surface area test, which yields a measured specific surface area of 8.58 cm²/g. The carbon-coated lithium iron phosphate material of the first comparative example is subjected to an elemental analysis, which yields a measured carbon content of 1.02 wt%.

Refer to table 1 below. Table 1 presents the slurry temperature (°C), BET surface area (cm²/g), and carbon content (wt%) of the carbon-coated lithium iron phosphate materials of the first demonstrative example and the first comparative example. Compared to the target specification of the carbon content of 1.30 wt%, the carbon loss rate of the carbon-coated lithium iron phosphate material of the first demonstrative example is 11.5 wt%, while the carbon loss rate of the carbon-coated lithium iron phosphate material of the first comparative example is 21.5 wt%. Obviously, the carbon loss of the first demonstrative example with the slurry temperature of 25 °C is lower than that of the first comparative example with the slurry temperature of 45 °C, and the specific surface area of the carbon-coated lithium iron phosphate material of the first demonstrative example is higher than that of the first comparative example. Namely, by implementing the liquid cooling method through the water jacket to control the slurry temperature between 25 °C to 40 °C, the consistency of the lithium source solubility in the slurry is ensured, while avoiding the oxidation and decomposition of the carbon source in the high-temperature environment. As a result, the carbon content of the carbon-coated lithium iron phosphate material is guaranteed, thereby enhancing the stability of the product quality.

**Table 1**

| | Slurry temperature | Specific surface area | Carbon content |
|---|---|---|---|
| First demonstrative example | 25 °C | 9.60 cm²/g | 1.15 wt% |
| First comparative example | 45 °C | 8.58 cm²/g | 1.02 wt% |

### Second demonstrative example

First, a first slurry, a carbon source and a lithium source are provided. The first slurry is formed by reacting 5585 grams of iron powder, 11529 grams of 85 wt% phosphoric acid solution, and 40 liters of deionized water in a tank for a duration of 20 hours. In the second demonstrative example, target specifications for the carbon-coated lithium iron phosphate material include a weight of 1578 grams and a carbon content of 1.40 wt%. Notably, during the sintering process, 50 wt% of the carbon content is lost. Therefore, the carbon content in the carbon-coated lithium iron phosphate material is half of the carbon content in the third slurry. To achieve the target specification, 44.2 grams of carbon needs to be added as the carbon source. Furthermore, in the second demonstrative example, the carbon source is a glucose, where carbon atoms account for 40 wt% of its molecular mass. Consequently, 110.5 grams of glucose is required to yield the desired 44.2 grams of carbon. The lithium source is 1197 grams of lithium hydroxide (LiOH) and 1847 grams of lithium carbonate (Li₂CO₃). The 5585 grams of iron powder contains 100 moles of iron, while the 11529 grams of 85 wt% phosphoric acid solution contains 100 moles of phosphorus. The combination of the 1197 grams of lithium hydroxide and the 1847 grams of lithium carbonate contains 100 moles of lithium. These components are used to produce 100 moles of lithium iron phosphate.

Next, the 110.5 grams of glucose, the 1197 grams of lithium hydroxide (LiOH) and the 1847 grams of lithium carbonate (Li₂CO₃) are added to the mixing first slurry, and are reacted to form a second slurry. Subsequently, the second slurry is ground by a ball milling method to form a third slurry. During the grinding process, a liquid cooling method is performed to control the temperature of the second slurry through the cooling jacket of the tank. The temperature of the second slurry is maintained at 27 °C. The third slurry has a median particle size (D50) of 1.0 µm.

Finally, the third slurry is dried and sintered to form a carbon-coated lithium iron phosphate. The third slurry is dried by a spray drying method, and is sintered at a temperature ranged from 550 °C and 750 °C in a nitrogen atmosphere for a duration of 10 hours to form a carbon-coated lithium iron phosphate. The carbon-coated lithium iron phosphate material of the second demonstrative example is subjected to a BET specific surface area test, which yields a measured specific surface area of 9.40 cm²/g. The carbon-coated lithium iron phosphate material of the second demonstrative example is subjected to an elemental analysis, which yields a measured carbon content of 1.25 wt%.

### Second comparative example

The manufacturing method of the second comparative example is roughly similar to that of the second demonstrative example. However, in the second comparative example, the temperature of the second slurry is maintained at 45 °C. The carbon-coated lithium iron phosphate material of the second comparative example is subjected to a BET specific surface area test, which yields a measured specific surface area of 9.04 cm²/g. The carbon-coated lithium iron phosphate material of the second comparative example is subjected to an elemental analysis, which yields a measured carbon content of 1.11 wt%.

Refer to table 2 below. Table 2 presents the slurry temperature (°C), BET surface area (cm²/g), and carbon content (wt%) of the carbon-coated lithium iron phosphate materials of the second demonstrative example and the second comparative example. Compared to the target specification of the carbon content of 1.40 wt%, the carbon loss rate of the carbon-coated lithium iron phosphate material of the second demonstrative example is 10.7 wt%, while the carbon loss rate of the carbon-coated lithium iron phosphate material of the second comparative example is 20.7 wt%. Obviously, the carbon loss of the second demonstrative example with the slurry temperature of 27 °C is lower than that of the second comparative example with the slurry temperature of 45 °C, and the specific surface area of the carbon-coated lithium iron phosphate material of the second demonstrative example is higher than that of the second comparative example. Furthermore, the carbon loss of the second demonstrative example with the slurry temperature of 27 °C is even lower than that of the first demonstrative example with the slurry temperature of 25 °C. Namely, by implementing the liquid cooling method through the water jacket to control the slurry temperature between 27 °C to 40 °C, the consistency of the lithium source solubility in the slurry is ensured, while avoiding the oxidation and decomposition of the carbon source in the high-temperature environment. As a result, the carbon content of the carbon-coated lithium iron phosphate material is guaranteed, thereby enhancing the stability of the product quality.

**Table 2**

| | Slurry temperature | Specific surface area | Carbon content |
|---|---|---|---|
| Second demonstrative example | 27 °C | 9.40 cm²/g | 1.25 wt% |
| Second comparative example | 45 °C | 9.04 cm²/g | 1.11 wt% |

### Third demonstrative example

First, a first slurry, a carbon source and a lithium source are provided. The first slurry is formed by reacting 5585 grams of iron powder, 11529 grams of 85 wt% phosphoric acid solution, and 40 liters of deionized water in a tank for a duration of 20 hours. In the third demonstrative example, target specifications for the carbon-coated lithium iron phosphate material include a weight of 1578 grams and a carbon content of 1.40 wt%. Notably, during the sintering process, 50 wt% of the carbon content is lost. Therefore, the carbon content in the carbon-coated lithium iron phosphate material is half of the carbon content in the third slurry. To achieve the target specification, 44.2 grams of carbon needs to be added as the carbon source. Furthermore, in the third demonstrative example, the carbon source is a glucose, where carbon atoms account for 40 wt% of its molecular mass. Consequently, 110.5 grams of glucose is required to yield the desired 44.2 grams of carbon. The lithium source is 1197 grams of lithium hydroxide (LiOH) and 1847 grams of lithium carbonate (Li₂CO₃). The 5585 grams of iron powder contains 100 moles of iron, while the 11529 grams of 85 wt% phosphoric acid solution contains 100 moles of phosphorus. The combination of the 1197 grams of lithium hydroxide and the 1847 grams of lithium carbonate contains 100 moles of lithium. These components are used to produce 100 moles of lithium iron phosphate.

Next, the 110.5 grams of glucose, the 1197 grams of lithium hydroxide (LiOH) and the 1847 grams of lithium carbonate (Li₂CO₃) are added to the mixing first slurry, and are reacted to form a second slurry. Subsequently, the second slurry is ground by a ball milling method to form a third slurry. During the grinding process, a liquid cooling method is performed to control the temperature of the second slurry through the cooling jacket of the tank. The temperature of the second slurry is maintained at 25 °C. The third slurry has a median particle size (D50) of 1.0 µm.

Finally, the third slurry is dried and sintered to form a carbon-coated lithium iron phosphate. The third slurry is dried by a spray drying method, and is sintered at a temperature ranged from 550 °C and 750 °C in a nitrogen atmosphere for a duration of 10 hours to form a carbon-coated lithium iron phosphate. The carbon-coated lithium iron phosphate material of the third demonstrative example is subjected to a BET specific surface area test, which yields a measured specific surface area of 9.82 cm²/g. The carbon-coated lithium iron phosphate material of the third demonstrative example is subjected to an elemental analysis, which yields a measured carbon content of 1.24 wt%.

### Fourth demonstrative example

The manufacturing method of the fourth demonstrative example is roughly similar to that of the third demonstrative example. However, in the fourth demonstrative example, the temperature of the second slurry is maintained at 35 °C. The carbon-coated lithium iron phosphate material of the fourth demonstrative example is subjected to a BET specific surface area test, which yields a measured specific surface area of 10.08 cm²/g. The carbon-coated lithium iron phosphate material of the fourth demonstrative example is subjected to an elemental analysis, which yields a measured carbon content of 1.28 wt%.

Refer to table 3 below. Table 3 presents the slurry temperature (°C), BET surface area (cm²/g), and carbon content (wt%) of the carbon-coated lithium iron phosphate materials of the third demonstrative example and the fourth demonstrative example. Compared to the target specification of the carbon content of 1.40 wt%, the carbon loss rate of the carbon-coated lithium iron phosphate material of the third demonstrative example is 11.4 wt%, while the carbon loss rate of the carbon-coated lithium iron phosphate material of the fourth demonstrative example is 8.6 wt%. Obviously, the carbon loss of the fourth demonstrative example with the slurry temperature of 35 °C is lower than that of the third demonstrative example with the slurry temperature of 25 °C, and the specific surface area of the carbon-coated lithium iron phosphate material of the fourth demonstrative example is higher than that of the third demonstrative example. Namely, by implementing the liquid cooling method through the water jacket to control the slurry temperature between 27 °C to 35 °C, the consistency of the lithium source solubility in the slurry is ensured, while avoiding the oxidation and decomposition of the carbon source in the high-temperature environment. As a result, the carbon content of the carbon-coated lithium iron phosphate material is guaranteed, thereby enhancing the stability of the product quality.

**Table 3**

| | Slurry temperature | Specific surface area | Carbon content |
|---|---|---|---|
| Third demonstrative example | 25 °C | 9.82 cm²/g | 1.24 wt% |
| Fourth demonstrative example | 35 °C | 10.08 cm²/g | 1.28 wt% |

### Fifth demonstrative example

First, a first slurry, a carbon source and a lithium source are provided. The first slurry is formed by reacting 5585 grams of iron powder, 11529 grams of 85 wt% phosphoric acid solution, and 40 liters of deionized water in a tank for a duration of 20 hours. In the fifth demonstrative example, target specifications for the carbon-coated lithium iron phosphate material include a weight of 1578 grams and a carbon content of 1.20 wt%. Notably, during the sintering process, 50 wt% of the carbon content is lost. Therefore, the carbon content in the carbon-coated lithium iron phosphate material is half of the carbon content in the third slurry. To achieve the target specification, 37.9 grams of carbon needs to be added as the carbon source. Furthermore, in the fifth demonstrative example, the carbon source is a glucose, where carbon atoms account for 40 wt% of its molecular mass. Consequently, 94.7 grams of glucose is required to yield the desired 37.9 grams of carbon. The lithium source is 1197 grams of lithium hydroxide (LiOH) and 1847 grams of lithium carbonate (Li₂CO₃). The 5585 grams of iron powder contains 100 moles of iron, while the 11529 grams of 85 wt% phosphoric acid solution contains 100 moles of phosphorus. The combination of the 1197 grams of lithium hydroxide and the 1847 grams of lithium carbonate contains 100 moles of lithium. These components are used to produce 100 moles of lithium iron phosphate.

Next, the 94.7 grams of glucose, the 1197 grams of lithium hydroxide (LiOH) and the 1847 grams of lithium carbonate (Li₂CO₃) are added to the mixing first slurry, and are reacted to form a second slurry. Subsequently, the second slurry is ground by a ball milling method to form a third slurry. During the grinding process, a liquid cooling method is performed to control the temperature of the second slurry through the cooling jacket of the tank. The temperature of the second slurry is maintained at 25 °C. The third slurry has a median particle size (D50) of 1.0 µm.

Finally, the third slurry is dried and sintered to form a carbon-coated lithium iron phosphate. The third slurry is dried by a spray drying method, and is sintered at a temperature ranged from 550 °C and 750 °C in a nitrogen atmosphere for a duration of 10 hours to form a carbon-coated lithium iron phosphate. The carbon-coated lithium iron phosphate material of the fifth demonstrative example is subjected to a BET specific surface area test, which yields a measured specific surface area of 8.97 cm²/g. The carbon-coated lithium iron phosphate material of the fifth demonstrative example is subjected to an elemental analysis, which yields a measured carbon content of 1.10 wt%.

### Sixth demonstrative example

The manufacturing method of the sixth demonstrative example is roughly similar to that of the fifth demonstrative example. However, in the sixth demonstrative example, the temperature of the second slurry is maintained at 35 °C. The carbon-coated lithium iron phosphate material of the sixth demonstrative example is subjected to a BET specific surface area test, which yields a measured specific surface area of 9.34 cm²/g. The carbon-coated lithium iron phosphate material of the fourth demonstrative example is subjected to an elemental analysis, which yields a measured carbon content of 1.11 wt%.

Refer to table 4 below. Table 4 presents the slurry temperature (°C), BET surface area (cm²/g), and carbon content (wt%) of the carbon-coated lithium iron phosphate materials of the fifth demonstrative example and the sixth demonstrative example. Compared to the target specification of the carbon content of 1.20 wt%, the carbon loss rate of the carbon-coated lithium iron phosphate material of the fifth demonstrative example is 8.3 wt%, while the carbon loss rate of the carbon-coated lithium iron phosphate material of the sixth demonstrative example is 7.5 wt%. Obviously, the carbon loss of the sixth demonstrative example with the slurry temperature of 35 °C is lower than that of the fifth demonstrative example with the slurry temperature of 25 °C, and the specific surface area of the carbon-coated lithium iron phosphate material of the sixth demonstrative example is higher than that of the fifth demonstrative example. Namely, by implementing the liquid cooling method through the water jacket to control the slurry temperature between 27 °C to 35 °C, the consistency of the lithium source solubility in the slurry is ensured, while avoiding the oxidation and decomposition of the carbon source in the high-temperature environment. As a result, the carbon content of the carbon-coated lithium iron phosphate material is guaranteed, thereby enhancing the stability of the product quality.

**Table 4**

| | Slurry temperature | Specific surface area | Carbon content |
|---|---|---|---|
| Fifth demonstrative example | 25 °C | 8.97 cm²/g | 1.10 wt% |
| Sixth demonstrative example | 35 °C | 9.34 cm²/g | 1.11 wt% |

In summary, the present disclosure provides a manufacturing method of a carbon-coated lithium iron phosphate material that effectively regulates the slurry temperature, thereby ensuring optimal carbon content and enhancing the stability of the product's quality. First, a carbon source, a lithium source, and a slurry formed from an iron source and a phosphorus source is provided. Next, the first slurry, the carbon source and the lithium source are mixed to form a second slurry. The second slurry is then ground in a tank at a temperature ranged from 25 °C to 40 °C to form a third slurry. Finally, the third slurry is dried and sintered to form a carbon-coated lithium iron phosphate material. By controlling the slurry temperature within a specific temperature range, the consistency of the lithium source solubility in the slurry is ensured, while avoiding the oxidation and decomposition of the carbon source in the high-temperature environment. As a result, the carbon content of the carbon-coated lithium iron phosphate material is guaranteed, thereby enhancing the stability of the product quality. Furthermore, the slurry temperature is controlled by employing liquid cooling method through a cooling jacket. The cooling jacket surrounds the internal space of the tank where the slurry is accommodated, ensuring smooth and uniform temperature control, thereby further enhances the stability of the product quality.

## Claims

1. A manufacturing method of a carbon-coated lithium iron phosphate material, **characterized by** comprising steps of:
(a) providing a first slurry, a carbon source and a lithium source, wherein the first slurry is formed from an iron source and a phosphorus source;
(b) mixing the first slurry, the carbon source and the lithium source to form a second slurry, and grinding the second slurry in a tank (1) at a first temperature to form a third slurry, wherein the first temperature is ranged from 25 °C to 40 °C; and
(c) drying and sintering the third slurry to form the carbon-coated lithium iron phosphate material including a core layer and a coating layer coated on the core layer, wherein the core layer comprises lithium, iron, and phosphorus, wherein the coating layer comprises carbon.

2. The manufacturing method of the carbon-coated lithium iron phosphate material according to claim 1, wherein a liquid cooling method is performed to control the first temperature.

3. The manufacturing method of the carbon-coated lithium iron phosphate material according to claim 2, wherein the tank (1) further comprises a first chamber (10) and a cooling jacket (20), wherein the second slurry and the third slurry are accommodated in the first chamber (10) for mixing and grinding, the cooling jacket (20) is disposed to surround the first chamber (10), and the liquid cooling method is performed through the cooling jacket (20), wherein a liquid flows in the cooling jacket (20) to absorb a heat generated from the second slurry in the first chamber (10).

4. The manufacturing method of the carbon-coated lithium iron phosphate material according to claim 3, wherein the cooling jacket (20) comprises at least two channels (22, 23) and a second chamber (21), wherein the second chamber (21) is connected between at least two channels (22, 23) and disposed to surround the first chamber (10), and a liquid flows into and out of the second chamber (21) through the at least two channels (22, 23), wherein the liquid flows into the second chamber (21) through the first channel (22), the heat generated from the second slurry in the first chamber (10) is transferred to the second chamber (21) and absorbed by the liquid, and then the liquid flows out of the second chamber (21) through the second channel (23).

5. The manufacturing method of the carbon-coated lithium iron phosphate material according to any of the claims 1 to 4, wherein the carbon source, the lithium source and the first slurry are ground by a ball milling method.

6. The manufacturing method of the carbon-coated lithium iron phosphate material according to claim 1, wherein the second slurry and the third slurry are alkaline.

7. The manufacturing method of the carbon-coated lithium iron phosphate material according to any of the claims 1 to 6, wherein the iron source comprises an iron powder, the phosphorus source comprises a phosphoric acid solution, and the iron powder and the phosphoric acid solution are reacted to form the first slurry.

8. The manufacturing method of the carbon-coated lithium iron phosphate material according to any of the claims 1 to 7, wherein the third slurry is dried by a spray drying method.

9. The manufacturing method of the carbon-coated lithium iron phosphate material according to any of the claims 1 to 8, wherein the third slurry is sintered at a sintering temperature ranged from 550 °C to 750 °C.

10. The manufacturing method of the carbon-coated lithium iron phosphate material according to any of the claims 1 to 9, wherein the third slurry is sintered in a non-oxidizing atmosphere.

11. The manufacturing method of the carbon-coated lithium iron phosphate material according to any of the claims 1 to 10, wherein the carbon-coated lithium iron phosphate material has a carbon content ranged from 1.0 wt% to 1.6 wt%.

## Patentansprüche

1. Verfahren zur Herstellung eines kohlenstoffbeschichteten Lithium-Eisenphosphat-Materials, **dadurch gekennzeichnet, dass** es die folgenden Schritte umfasst:
(a) Bereitstellen einer ersten Aufschlämmung, einer Kohlenstoffquelle und einer Lithiumquelle, wobei die erste Aufschlämmung aus einer Eisenquelle und einer Phosphorquelle gebildet wird;
(b) Mischen der ersten Aufschlämmung, der Kohlenstoffquelle und der Lithiumquelle, um eine zweite Aufschlämmung zu bilden, und Mahlen der zweiten Aufschlämmung in einem Tank (1) bei einer ersten Temperatur, um eine dritte Aufschlämmung zu bilden, wobei die erste Temperatur im Bereich von 25 °C bis 40 °C liegt; und
(c) Trocknen und Sintern der dritten Aufschlämmung, um das kohlenstoffbeschichtete Lithium-Eisen-Phosphat-Material zu bilden, das eine Kernschicht und eine auf die Kernschicht aufgetragene Überzugsschicht enthält, wobei die Kernschicht Lithium, Eisen und Phosphor umfasst, wobei die Überzugsschicht Kohlenstoff umfasst.

2. Das Verfahren zur Herstellung des kohlenstoffbeschichteten Lithium-Eisenphosphat-Materials nach Anspruch 1, bei dem ein Flüssigkühlverfahren zur Steuerung der ersten Temperatur durchgeführt wird.

3. Das Verfahren zur Herstellung des kohlenstoffbeschichteten Lithium-Eisenphosphat-Materials nach Anspruch 2, wobei der Tank (1) ferner eine erste Kammer (10) und einen Kühlmantel (20) umfasst, wobei die zweite Aufschlämmung und die dritte Aufschlämmung in der ersten Kammer (10) zum Mischen und Mahlen untergebracht sind, der Kühlmantel (20) so angeordnet ist, dass er die erste Kammer (10) umgibt, und das Flüssigkeitskühlverfahren durch den Kühlmantel (20) durchgeführt wird, wobei eine Flüssigkeit in den Kühlmantel (20) fließt, um eine von der zweiten Aufschlämmung in der ersten Kammer (10) erzeugte Wärme zu absorbieren.

4. Das Verfahren zur Herstellung des kohlenstoffbeschichteten Lithium-Eisenphosphat-Materials nach Anspruch 3, wobei der Kühlmantel (20) mindestens zwei Kanäle (22, 23) und eine zweite Kammer (21) umfasst, wobei die zweite Kammer (21) zwischen mindestens zwei Kanälen (22, 23) angeschlossen und so angeordnet ist, dass sie die erste Kammer (10) umgibt, und eine Flüssigkeit durch die mindestens zwei Kanäle (22, 23) in die zweite Kammer (21) hinein und aus ihr heraus fließt, wobei die Flüssigkeit durch den ersten Kanal (22) in zweite Kammer (21) hineinfließt, die von der zweiten Aufschlämmung in der ersten Kammer (10) erzeugte Wärme auf die zweite Kammer (21) übertragen und von der Flüssigkeit absorbiert wird und die Flüssigkeit dann durch den zweiten Kanal (23) aus der zweiten Kammer (21) herausfließt.

5. Das Verfahren zur Herstellung des kohlenstoffbeschichteten Lithium-Eisenphosphat-Materials nach einem der Ansprüche 1 bis 4, wobei die Kohlenstoffquelle, die Lithiumquelle und die erste Aufschlämmung durch ein Kugelmahlverfahren gemahlen werden.

6. Das Verfahren zur Herstellung des kohlenstoffbeschichteten Lithium-Eisenphosphat-Materials nach Anspruch 1, wobei die zweite Aufschlämmung und die dritte Aufschlämmung alkalisch sind.

7. Das Verfahren zur Herstellung des kohlenstoffbeschichteten Lithium-Eisenphosphat-Materials s nach einem der Ansprüche 1 bis 6, wobei die Eisenquelle ein Eisenpulver umfasst, die Phosphorquelle eine Phosphorsäurelösung umfasst und das Eisenpulver und die Phosphorsäurelösung zur Bildung der ersten Aufschlämmung umgesetzt werden.

8. Das Verfahren zur Herstellung des kohlenstoffbeschichteten Lithium-Eisenphosphat-Materials nach einem der Ansprüche 1 bis 7, wobei die dritte Aufschlämmung durch ein Sprühtrocknungsverfahren getrocknet wird.

9. Das Verfahren zur Herstellung des kohlenstoffbeschichteten Lithium-Eisenphosphat-Materials nach einem der Ansprüche 1 bis 8, wobei die dritte Aufschlämmung bei einer Sintertemperatur im Bereich von 550 °C bis 750 °C gesintert wird.

10. Das Verfahren zur Herstellung des kohlenstoffbeschichteten Lithium-Eisenphosphat-Materials nach einem der Ansprüche 1 bis 9, wobei die dritte Aufschlämmung in einer nicht oxidierenden Atmosphäre gesintert wird.

11. Das Verfahren zur Herstellung des kohlenstoffbeschichteten Lithium-Eisenphosphat-Materials nach einem der Ansprüche 1 bis 10, wobei das kohlenstoffbeschichtete Lithiumeisenphosphatmaterial einen Kohlenstoffgehalt im Bereich von 1,0 Gew.-% bis 1,6 Gew.-% aufweist.

## Revendications

1. Un procédé de fabrication d'un matériau phosphate de fer et de lithium revêtu de carbone, **caractérisé en ce qu'**il comprend les étapes suivantes :
(a) fournir une première suspension, une source de carbone et une source de lithium, dans lequel la première suspension est formée à partir d'une source de fer et d'une source de phosphore ;
(b) mélanger la première suspension, la source de carbone et la source de lithium pour former une deuxième suspension, et broyer la deuxième suspension dans un réservoir (1) à une première température pour former une troisième suspension, la première température étant dans la plage de 25 °C à 40 °C ; et
(c) le séchage et le frittage de la troisième bouillie pour former le matériau de phosphate de fer et de lithium revêtu de carbone contenant une couche de noyau et une couche de revêtement appliquée sur la couche de noyau, la couche de noyau comprenant du lithium, du fer et du phosphore, la couche de revêtement comprenant du carbone.

2. Le procédé de fabrication du matériau phosphate de fer et de lithium revêtu de carbone selon la revendication 1, dans lequel un procédé de refroidissement liquide est mis en oeuvre pour contrôler la première température.

3. Le procédé de fabrication du matériau phosphate de fer et de lithium revêtu de carbone selon la revendication 2, dans lequel le réservoir (1) comprend en outre une première chambre (10) et une chemise de refroidissement (20), la deuxième suspension et la troisième suspension étant logées dans la première chambre (10) pour le mélange et le broyage, la chemise de refroidissement (20) est disposée de manière à entourer la première chambre (10), et le procédé de refroidissement par liquide est mis en oeuvre par la chemise de refroidissement (20), dans lequel un liquide s'écoule dans la chemise de refroidissement (20) pour absorber une chaleur générée par la deuxième suspension dans la première chambre (10).

4. Le procédé de fabrication du matériau phosphate de fer et de lithium revêtu de carbone selon la revendication 3, dans lequel la chemise de refroidissement (20) comprend au moins deux canaux (22, 23) et une deuxième chambre (21), la deuxième chambre (21) étant raccordée entre au moins deux canaux (22, 23) et étant disposée de manière à entourer la première chambre (10), et un liquide passant par les au moins deux canaux (22, 23), le liquide s'écoule dans la deuxième chambre (21) par le premier canal (22), la chaleur générée par la deuxième suspension dans la première chambre (10) est transférée à la deuxième chambre (21) et absorbée par le liquide, et le liquide s'écoule ensuite hors de la deuxième chambre (21) par le deuxième canal (23).

5. Le procédé de production du matériau phosphate de fer et de lithium revêtu de carbone selon l'une quelconque des revendications 1 à 4, dans lequel la source de carbone, la source de lithium et la première suspension sont broyées par un procédé de broyage à billes.

6. Le procédé de fabrication du matériau de phosphate de fer et de lithium revêtu de carbone selon la revendication 1, dans lequel la deuxième suspension et la troisième suspension sont alcalines.

7. Le procédé de production du matériau phosphate de fer et de lithium revêtu de carbone s selon l'une quelconque des revendications 1 à 6, dans lequel la source de fer comprend une poudre de fer, la source de phosphore comprend une solution d'acide phosphorique et la poudre de fer et la solution d'acide phosphorique sont mises à réagir pour former la première suspension.

8. Le procédé de fabrication du matériau phosphate de fer et de lithium revêtu de carbone selon l'une quelconque des revendications 1 à 7, dans lequel la troisième suspension est séchée par un procédé de séchage par pulvérisation.

9. Le procédé de fabrication du matériau phosphate de fer et de lithium revêtu de carbone selon l'une quelconque des revendications 1 à 8, dans lequel la troisième suspension est frittée à une température de frittage dans la plage de 550 °C à 750 °C.

10. Le procédé de fabrication du matériau phosphate de fer et de lithium revêtu de carbone selon l'une quelconque des revendications 1 à 9, dans lequel la troisième suspension est frittée dans une atmosphère non oxydante.

11. Le procédé de fabrication du matériau phosphate de fer et de lithium revêtu de carbone selon l'une quelconque des revendications 1 à 10, dans lequel le matériau phosphate de fer et de lithium revêtu de carbone a une teneur en carbone dans la plage de 1,0 % à 1,6 % en poids.
